(19) Europäisches Patentamt
European Patent Office
Office européen des brevets

(11) **EP 1 188 479 B1**

(12) **EUROPEAN PATENT SPECIFICATION**

(45) Date of publication and mention
of the grant of the patent:
**20.02.2008 Bulletin 2008/08**

(51) Int Cl.:
*B01J 20/34* (2006.01)   *B01J 20/28* (2006.01)
*B01J 20/18* (2006.01)   *B01D 53/04* (2006.01)
*B01D 53/047* (2006.01)

(21) Application number: **01307952.0**

(22) Date of filing: **18.09.2001**

(54) **Activation processes for monolith adsorbents**

Verfahren zur Aktivierung von monolithischen Adsorptionsmitteln

Méthodes d'activation d'adsorbants monolithiques

(84) Designated Contracting States:
**AT BE CH CY DE DK ES FI FR GB GR IE IT LI LU MC NL PT SE TR**

(30) Priority: **18.09.2000 US 664568**
**29.09.2000 US 676012**

(43) Date of publication of application:
**20.03.2002 Bulletin 2002/12**

(73) Proprietor: **THE BOC GROUP, INC.**
**New Providence, NJ 07974-2082 (US)**

(72) Inventors:
• **Shen, Dongmin**
**Berkeley Heights,**
**New Jersey 07922 (US)**
• **Jale, Sudhakar Reddy**
**Scotch Plains,**
**New Jersey 07076 (US)**
• **Fitch, Frank Roger**
**Bedminster,**
**New Jersey 07921 (US)**
• **Jain, Ravi**
**Bridgewater,**
**New Jersey 08807 (US)**
• **Shirley, Arthur Irving**
**Piscataway,**
**New Jersey 08854 (US)**
• **Lu, Yaping**
**Scotch Plains,**
**New Jersey 07076 (US)**
• **Acharya, Divyanshu Rasiklal**
**Bridgewater,**
**New Jersey 08807 (US)**

(74) Representative: **Wickham, Michael et al**
**The Linde Group**
**Intellectual Property Department**
**The Priestley Centre**
**10 Priestley Road**
**The Surrey Research Park**
**Guildford, Surrey GU2 7XY (GB)**

(56) References cited:
EP-A- 0 667 183        EP-A- 0 842 697
EP-A- 1 070 531        DE-A- 4 140 455
US-A- 4 256 676        US-A- 5 580 369
US-A- 5 685 897        US-A- 5 972 835
US-A- 6 030 698

**Description**

*FIELD OF THE INVENTION*

The present invention provides processes for activating monolith adsorbents and for partially decomposing and/or removing the binding agents present in the monolith. More particularly, the present invention provides processes for using these monoliths in gas/vapour separation operations.

*BACKGROUND OF THE INVENTION*

Cyclic adsorption processes are frequently used to separate the components of a gas mixture. Typically, cyclic adsorption processes are conducted in one or more adsorbent vessels that are packed with a particulate adsorbent material which adsorbs at least one gaseous component of the gas mixture more strongly than it adsorbs at least one other component of the mixture. The adsorption process comprises repeatedly performing a series of steps, the specific steps of the sequence depending upon the particular cyclic adsorption process being carried out.

In any cyclic adsorption process, the adsorbent bed has a finite capacity to adsorb a given gaseous component and, therefore, the adsorbent requires periodic regeneration to restore its adsorption capacity. The procedure followed for regenerating the adsorbent varies according to the process. In VSA processes, the adsorbent is at least partially regenerated by creating vacuum in the adsorption vessel, thereby causing adsorbed component to be desorbed from the adsorbent, whereas in PSA processes, the adsorbent is regenerated at atmospheric pressure. In both VSA and PSA processes, the adsorption step is carried out at a pressure higher than the desorption or regeneration pressure.

A typical VSA process generally comprises of a series of four basic steps that includes (i) pressurization of the bed to the required pressure, (ii) production of the product gas at required purity, (iii) evacuation of the bed to a certain minimum pressure, and (iv) purging the bed with product gas under vacuum conditions. In addition a pressure equalization or bed balance step may also be present. This step basically minimizes vent losses and helps in improving process efficiency. The PSA process is similar but differs in that the bed is depressurised to atmospheric pressure and then purged with product gas at atmospheric pressure.

As mentioned above, the regeneration process includes a purge step during which a regeneration gas stream that is depleted in the component to be desorbed is passed countercurrently through the bed of adsorbent, thereby reducing the partial pressure of adsorbed component in the adsorption vessel which causes additional adsorbed component to be desorbed from the adsorbent. The non-adsorbed gaseous product may be used to purge the adsorbent beds since this gas is usually quite depleted in the adsorbed component of the feed gas mixture. It often requires a considerable quantity of purge gas to adequately regenerate the adsorbent. For example, it is not unusual to use half of the non-adsorbed product gas produced during the previous production step to restore the adsorbent to the desired extent. The purge gas requirement in both VSA and PSA processes are optimisation parameters and depend on the specific design of the plant and within the purview of one having ordinary skill in the art of gas separation.

Many process improvements have been made to this simple cycle design in order to reduce power consumption, improve product recovery and purity, and increase product flow rate. These have included multi-bed processes, single-column rapid pressure swing adsorption and, more recently, piston-driven rapid pressure swing adsorption and radial flow rapid pressure swing adsorption. The trend toward shorter cycle times is driven by the desire to design more compact processes with lower capital costs and lower power requirements. The objective has been to develop an adsorbent configuration that demonstrates a low pressure drop, a fast pressurization time and an ability to produce the required purity of oxygen. Honeycomb structured monoliths, which are normally made by high temperature treatment of a mixture of binders, additives and catalyst or adsorbent materials are suitable for fast cycle sorption processes. These monoliths, either in the form of one single block or in the form of extrudates with multiple random channels, exhibit unique features of low pressure drop, good mechanical properties and freedom from attrition and fluidisation problems of conventional catalysts and adsorbents. These types of monoliths have historically been employed as catalyst supports in automobile catalytic converters, catalytic combustion, electrochemical reactors and biochemical reactors. These monoliths however have very low loadings of active catalyst or adsorbent and not all of the adsorbent or catalyst material is accessible to the gas molecules passing through them.

Monoliths, however, that are made from paper like sheets containing polymeric fibres as described in US-A-5,660,048; US-A-5,660,221; US-A-5,685,897; and US-A-5,580,369, exhibit very high loadings of adsorbent material. Active adsorbent materials such as zeolites, carbon molecular sieve (CMS), alumina and other porous adsorbent materials can be embedded in the paper during the manufacturing process. In order to bind adsorbent particles to the fibrous material in the paper and to achieve a uniform distribution of adsorbent particles, many ingredients and additives may also be added into the slurry during the sheet manufacturing. Normally, the non-woven-fabric sheet (paper), which will be shaped into the monolith in later stages, comprises fibres such as polyaramids, one or more binders such as acrylic latex, a flocculating agent and active adsorbent materials.

The binder is added to the slurry to bind the adsorbent particles to the fibres. Through this process, adsorbent/ catalyst particles tend also to be encapsulated by the polymeric binder material. The adsorbent containing monoliths or sheets need to be activated at elevated temperatures to desorb water or other sorbed species from their active sites. In US-A-5,580,369,a composite adsorbent is activated in air at 200°C for one hour. A monolith wheel comprising bound sheets of paper impregnated with the composite adsorbent is formed. The resulting monolith wheel is employed in an air conditioning system to adsorb water vapour. The water vapour is desorbed again at temperatures of up to 200 to 300°C. The aforementioned degree of activation is sufficient, if the adsorbate molecules can diffuse through the binder layer to reach the adsorbent/catalyst. It has been demonstrated that such an activation below the temperature of binder decomposition works well in dehumidification applications, where the diffusivity or solubility of water through the binder is high and adsorbent does not need higher temperature activation. According to US-A- 5 580 639 if the monolith wheel contains binders and/or adhesives which decompose at temperatures lower than the expected operating temperature of the regeneration air stream, then these binders may be removed by treatment at a temperature somewhat higher than the temperature of ultimate use.

## SUMMARY OF THE INVENTION

It has been found in the current invention that in certain types of applications such as the adsorption of $N_2$ from air, the binder layer typically provides a kinetic barrier to adsorbate molecules from reaching the adsorbent particles. When this happens, the resulting monolith has poor kinetic performance for gas adsorption and desorption, which results in poor PSA/VSA performance in gas separation processes.

According to the present invention there is provided a process for preparing a monolith adsorbent for use in pressure swing adsorption or vacuum swing adsorption gas separation methods, the process comprising the steps of: forming a slurry comprising water, fibre, an organic binding agent, adsorbent and flocculating agent wherein said adsorbent is selected from zeolite type X, zeolite type A, ZSM-3, EMT, EMC-2, ZSM-18, ZK-5, ZSM-5, ZSM-11, β, L, chabazite, offretite, erionite, mordenite, gmelinite, mazzite, and mixtures thereof, alumina, silica, silica gel, amorphous aluminosilicate and clay materials; forming paper from said slurry; forming a monolith structure containing said paper; and activating the monolith structure by passing an activation gas stream through said monolith structure at a temperature sufficient to decompose at least part of the binding agent present in said adsorbent, characterised in that said temperature is in the range of 400°C to 500°C.

The present invention further provides a method for separating a first gaseous component from a gas mixture by passing the gas mixture into an adsorption zone containing a monolith adsorbent that has been treated by passing a heated regeneration gas through it thereby separating the first gaseous component from the gas mixture and recovering the adsorbed first gaseous component.

## DETAILED DESCRIPTION OF THE PREFERRED EMBODIMENTS

The activation gas that is utilized may be an inert gas such as argon and nitrogen or an inert gas containing another gas component, which can oxidize organic species under the activation conditions such as oxygen, nitrous oxide and ozone or other type of gas like hydrogen, preferably nitrogen, air or mixtures thereof.

The binding agents that are employed in manufacturing the paper sheet include but are not limited to acrylic latex, starch, polyvinyl alcohols, acrylics, polyurethane, polyethylene glycol, polypropylene glycol, polyacrylic acid, polyamide and polyamine. Other non-polymeric binders having a functionality of a carboxylic acid, aldehyde, amino acid, and amine can be employed. Inorganic binders such as silica and mineral silicates may also be used in manufacturing the paper sheet. When inorganic binders are used, only the organic functionality will be decomposed in addition to other organic chemical additives added during the stock preparation.

The fibres that are employed in manufacturing the sheets can be synthetic or natural and can be organic or inorganic. The synthetic organic polymeric fibres include aromatic polyamides, polyesters, polyvinyl chlorides, nylons, acrylics, polyethylenes, polypropylenes, acrylonitrile homopolymers, copolymers with halogenated monomers, styrene copolymers, and mixtures of polymers (polypropylene with low-density polyethylene, and high density polyethylene with polystyrene). The inorganic fibres include glass or metal fibres and rock wool etc. The natural fibres include wood pulp such as cellulose. Combination of organic and inorganic fibres can also be used. Fibrillated fibres, as described in US-A-5,685,897, can also be used. As noted above, the monolith structure when formed may take on any design and shape for use in gas separation processes. Although various cationic forms of zeolites can be chosen, preferably, the adsorbent is a Li containing or Li and bivalent cation containing or Li and trivalent cation containing zeolite of type A and X, which contains Si/Al molar ratio of 0.9 to 1.25, preferably 1.0 to 1.1, and most preferably with Si/Al ratio of less than 1.08.

As shown by thermogravimetric analysis, there are three different regions of weight losses during the activation of monolith. The low temperature weight loss up to 150° C is due to the weakly adsorbed water in zeolite. The weight loss from about 300 to 400° C is due to the decomposition of binder and for some fibres from 500-600° C is due to the decomposition of fibre. The desorption of strongly adsorbed zeolitic water generally occurs above 150° C, its loss overlapping with those of the binder and/or fibre weight losses. The shape of the weight loss curve depends on the type of binder used to manufacture the sheet, the temperature, the time and the nature of regeneration gas. The exact activation temperature depends on the nature of regeneration gas used for the activation. The activation should be carried out in such a way that most of the binder and zeolitic water will be removed without significantly damaging the fibre, which is the structural framework for the monolith. As such, the practice of the present invention will remove more than 50% of the binder from a monolith structure.

The temperature of the heated activation gas should be high enough to remove or decompose the binder material and activate the adsorbent materials. The removal of the binder material is not absolute as some binder must remain to bind the adsorbent material particles to the support as well as keep the corrugated structure of the monolith, while corrugated sheets are used to provide spaces in the formed monolith. If the activation gas contains an oxidizing gas component like oxygen, the binder can also be removed by the reaction with oxygen.

In the adsorption process embodiment of the invention, a component of a gas mixture that is more strongly adsorbed than other components of the gas mixture is separated from the other components by contacting the gas mixture with the adsorbent under conditions which effect adsorption of the strongly adsorbed component.

The temperature at which the adsorption step of the adsorption process is carried out depends upon a number of factors, such as the particular gases being separated, the particular adsorbent being used, and the pressure at which the adsorption is carried out. In general, the adsorption step of the process is carried out at a temperature of at least about -190° C, preferably at a temperature of at least about -20° C, and most preferably at a temperature of at least about 0° C. The upper temperature limit at which the adsorption step of the process is carried out is generally about 500° C, and the adsorption step is preferably carried out at temperatures not greater than about 70° C, and most preferably carried out at temperatures not greater than about 50° C.

The adsorption step of the process of the invention can be carried out at any of the usual and well known pressures employed for pressure swing adsorption processes. Typically the minimum absolute pressure at which the adsorption step is carried out is generally about 0.7 bara (bar absolute), preferably about 0.8 bara and most preferably about 0.9 bara. The adsorption can be carried out at pressures as high as 50 bara or more, but is preferably carried out at absolute pressures not greater than about 20 bara, and most preferably not greater than about 10 bar.

When the adsorption process is PSA or VSA, the pressure during the regeneration step is reduced, usually to an absolute pressure in the range of about 0.1 to about 5 bara, and preferably to an absolute pressure in the range of about 0.175 to about 2 bara, and most preferably to an absolute pressure in the range of about 0.2 to about 1.1 bara.

As indicated above, the process of the invention can be used to separate any two gases, provided that one of the gases is more strongly adsorbed by the adsorbents of the invention than is the other gas under either conditions of equilibrium or non-equilibrium, i.e., in the kinetic regime of a process. The process is particularly suitable for separating nitrogen from oxygen, nitrogen and argon from oxygen, carbon dioxide from air, dinitrogen oxide from air and for the separation of hydrocarbons, for example, the separation of alkenes, such as ethylene, propylene, etc., from alkanes, such as ethane, propane, etc., and the separation of straight-chain hydrocarbons from branched-chain hydrocarbons, e.g., the separation of n-butane from i-butane. Type A zeolites with appropriate cation compositions are particularly suitable for the separation of alkenes from alkanes, n-alkanes from i-alkanes and carbon dioxide from alkanes, alkenes and acetylene. The separation of these gases is preferably carried from air, dinitrogen oxide from air and for the separation of hydrocarbons, for example, the separation of alkenes, such as ethylene, propylene, etc., from alkanes, such as ethane, propane, etc., and the separation of straight-chain hydrocarbons from branched-chain hydrocarbons, e.g., the separation of n-butane from i-butane. Type A zeolites with appropriate cation compositions are particularly suitable for the separation of alkenes from alkanes, n-alkanes from i-alkanes and carbon dioxide from alkanes, alkenes and acetylene. The separation of these gases is preferably carried out at ambient temperature or higher, although the separation of nitrogen, oxygen and argon can be carried out at cryogenic temperatures.

It will be appreciated that it is within the scope of the present invention to utilize conventional equipment to monitor and automatically regulate the flow of gases within the system so that it can be fully automated to run continuously in an efficient manner.

The invention is further illustrated by the following examples in which, unless otherwise indicated, parts, percentages and ratios are on a weight basis.

### EXAMPLE 1

Lithium and rare-earth containing LSX (LiRELSX) sample was made as disclosed in the EXAMPLE 1 of US Pat. 5,464,467.

## EXAMPLE 2-6

Handsheets containing LiRELSX, latex binder and Kevlar fibre were activated at different temperatures in an oven in the presence of various gases as described in Table 1. The temperature was first raised to 100° C with a ramp of 2° C per minute and kept there for 4 hours. It was then raised to the required temperature with a rate of 2° C per minute. After the activation the monolith was cooled down to room temperature in flowing nitrogen.

**TABLE 1**

Activation conditions for the activation of LiRELSX handsheets in an oven.

| Example # | Sample Name | Activation Temp. (° C) | Carrier gas | Activation Time (hours) |
|---|---|---|---|---|
| 2 | Handsheet-300-$N_2$ | 300 | $N_2$ | 10 |
| 3 | Handsheet-400-$N_2$ | 400 | $N_2$ | 10 |
| 4 | Handsheet-300-0.5%$O_2$ | 300 | 0.5% $O_2$ in $N_2$ | 10 |
| 5 6 | Handsheet-400-0.5%$O_2$ Handsheet-350-Air | 400 350 | 0.5% $O_2$ in $N_2$ Air | 6 10 |

## EXAMPLE 7-10

Adsorbent containing flat handsheet was bonded to a corrugated sheet of the same to form a single-faced corrugated sheet, which was then spirally wrapped to make a monolith structure containing plurality of parallel channels. These monolithic structures were activated at different temperatures in tubular furnace in the presence of $N_2$ or 0.5% $O_2$ in $N_2$ or Air as described in Table 2. The temperature was first raised to 100° C with a ramp of 2° C per minute and kept there for 4 hours. It was then raised to the required temperature with a rate of 2° C per minute. After the activation the monolith was cooled down to room temperature in flowing nitrogen.

**TABLE 2**

Activation conditions for the activation of LiRELSX containing monolithic structures.

| Example # | Sample Name | Activation Temp. (° C) | Carrier gas | Activation Time (hours) |
|---|---|---|---|---|
| 7 | Monolith-350-$N_2$ | 350 | $N_2$ | 10 |
| 8 | Monolith-400-$N_2$ | 400 | $N_2$ | 10 |
| 9 | Monolith-350-0.5% $O_2$ | 350 | 0.5% $O_2$ in $N_2$ | 8 |
| 10 | Monolith-400-0.5% $O_2$ | 400 | 0.5% $O_2$ in $N_2$ | 4 |

## EXAMPLE 11

Adsorption isotherms of nitrogen ($N_2$) and oxygen ($O_2$) on the products of examples 2-10 were measured gravimetrically using Cahn 2000 Series microbalance enclosed in a stainless steel vacuum/pressure system. About 100 mg of handsheet sample was carefully evacuated and its temperature increased to that shown in TABLES 1 and 2 at a rate of 1°-2° C per minute. The adsorption isotherms for nitrogen and oxygen were measured at 25° C in the pressure range 20-6900 mbar for nitrogen and 20-2000 mbar for oxygen and the data fitted to a single and multiple site langmuir isotherm model. The fits to the nitrogen data were used to calculate the effective capacity for nitrogen at 25° C and $N_2/O_2$ selectivities. The effective nitrogen capacity defined as the difference between the nitrogen capacity at 1000 mbar and that at 300 mbar gives a good indication of the capacity of the adsorbent in a PSA process operated between upper and lower pressures in this range. The selectivities of the samples for nitrogen over oxygen in air at 300 and 1000 mbar and 25° C were derived from the pure gas isotherms for nitrogen and oxygen using Langmuir mixing rules (Ref. e.g. A.L. Myers: AIChE Journal: 29(4), (1983), p691-693). The usual definition for selectivity was used, where the selectivity (S) is given by:

$$S = (X_{N2}/Y_{N2})/(X_{O2}/Y_{O2})$$

where $X_{N2}$ and $X_{O2}$ are the mole fractions of nitrogen and oxygen, respectively, in the adsorbed phases, and $Y_{N2}$ and

$Y_{O2}$ are the mole fractions of nitrogen and oxygen, respectively, in the gas phase. The adsorption results for the samples from Examples 2-10 are given Table 3.

**TABLE 3**

Adsorption capacities of handsheets activated under different conditions.

| Example # | Sample Name | Effective $N_2$ capacity (mmol/g) | $N_2/O_2$ selectivity | |
|---|---|---|---|---|
| | | | 1000 mbar | 300 mbar |
| 2 | Handsheet-300-$N_2$ | 0.465 | 4.5 | 5.6 |
| 3 | Handsheet-400-$N_2$ | 0.569 | 5.5 | 7.8 |
| 4 | Handsheet-300-10%$O_2$ | 0.508 | 5.2 | 7.0 |
| 5 | Handsheet-400-10%$O_2$ | 0.531 | 6.0 | 8.9 |
| 6 | Handsheet-350-Air | 0.560 | 6.2 | 8.9 |
| 7 | Monolith-350-$N_2$ | 0.473 | 4.2 | 5.6 |
| 8 | Monolith-400-$N_2$ | 0.496 | 4.4 | 6.0 |
| 9 | Monolith-350-0.5% $O_2$ | 0.513 | 5.5 | 7.7 |
| 10 | Monolith-400-0.5% $O_2$ | 0.532 | 7.5 | 10.8 |

**EXAMPLE 12**

The sorption kinetic performance of the monoliths were tested using the Frequency-Response method (V. Yasuda, Heterog. Chem. Rev., 1994, v.1, p.103). About 1.5 g of small monolith sheets (e.g. 8 x 25 mm) were placed into a sorption cell and activated in-situ under a vacuum < $10^{-4}$ torr at temperatures of 300, 350 and 400 °C. After activation, the sample was cooled down to 25 °C. Nitrogen was admitted into the sorption cell and allowed to reach an equilibrium of 5 torr of nitrogen. The sorption kinetic time constants of nitrogen in the monolith sheets were determined by modulating the volume of the sorption cell by c. $\pm 1\%$ at frequencies ranging from 0.001 to 10 Hz and then analysing the pressure responses of the sorbate-sorbent system with an appropriate model. The overall sorption kinetic time constants obtained for nitrogen in the three monolith sheets activated at three different temperatures are compared in Table 4. A significant improvement in the uptake rates was made by increasing the activation temperature.

**TABLE 4**

Comparison of nitrogen sorption kinetics in the monolith sheets at 25 °C and 5 torr $N_2$

| Activation Temperature, °C | 300 | 350 | 400 |
|---|---|---|---|
| Relative Uptake Rate | 1 | 10~100 | ~1000 |

It can be seen that after activation, the sorption equilibrium and kinetic performances of the monolith materials for gas separation and purification are improved by one to three orders of magnitude which is very significant. This leads to a very significant increase in the performance of these monoliths in actual PSA/VSA operations.

While this invention has been described with respect to particular embodiments thereof, it is apparent that numerous other forms and modifications of the invention will be obvious to those skilled in the art. The appended claims and this invention generally should be construed to cover all such obvious forms and modifications which are within the scope of the present invention.

**Claims**

1. A process for preparing a monolith adsorbent for use in pressure swing adsorption or vacuum swing adsorption gas separation methods, the process comprising the steps of: forming a slurry comprising water, fibre, an organic binding agent, adsorbent and flocculating agent wherein said adsorbent is selected from zeolite type X, zeolite type A, ZSM-3, EMT, EMC-2, ZSM-18, ZK-5, ZSM-5, ZSM-11, $\beta$, L, chabazite, offretite, erionite, mordenite, gmelinite, mazzite, and mixtures thereof, alumina, silica, silica gel, amorphous aluminosilicate and clay materials; forming paper from said slurry; forming a monolith structure containing said paper; and activating the monolith structure by passing an activation gas stream through said monolith structure at a temperature sufficient to decompose at least part of the binding agent present in said adsorbent, **characterised in that** said temperature is in the range of 400°C to 500°C.

**2.** A process as claimed in Claim 1, wherein said activation gas is selected from the group consisting of nitrogen, argon, hydrogen, oxygen, nitrous oxide, ozone, and mixtures thereof.

**3.** A process as claimed in Claim 1 or Claim 2 wherein said temperature is sufficient to remove greater than 50 % of the said binding agents.

**4.** A process as claimed in any one of the preceding claims, wherein said binding agents are selected from the group consisting of acrylic latex, starch, polyvinyl alcohols, acrylics, polyurethane, polyethylene glycol, polypropylene glycol, polyacrylic acid, polyamide and polyamine.

**5.** A process as claimed in any one of the preceding claims, wherein said adsorbent comprises a zeolite type X or zeolite type A, the zeolite containing lithium cations, lithium and divalent cations, or lithium and trivalent cations.

**6.** A process according to any one of the preceding claims, wherein the activation gas is nitrogen and the adsorbent is activated for a period of ten hours at a temperature of 400°C.

**7.** A pressure swing or vacuum swing adsorption method of separating a first gaseous component from a gas mixture comprising a first gaseous component and a second gaseous component comprising:

(a) passing the gaseous mixture into an adsorption zone containing a monolith adsorbent prepared by a process according to any one of the preceding claims and wherein said monolith adsorbent is capable of separating said first gaseous component from said second gaseous component; and
(b) recovering the non-preferentially adsorbed gaseous component from said adsorption zone.

**Patentansprüche**

**1.** Verfahren zum Herstellen eines monolithischen Adsorptionsmittels zur Verwendung bei Druckwechseladsorptions- oder Vakuumwechseladsorptions-Gastrennverfahren, mit den Schritten: Bilden einer Schlämme, die aus Wasser, Fasern, einem organischen Bindemittel, Adsorptionsmittel und Flockungsmittel besteht, wobei das Adsorptionsmittel aus Zeolith Typ X, Zeolith Typ A, ZSM-3, EMT, EMC-2, ZSM-18, ZK-5, ZSM-5, ZSM-11, β, L, Chabazit, Offretit, Erionit, Mordenit, Gmelinit, Mazzit und Gemischen hiervon, Aluminiumoxid, Silika, Silikagel, amorphes Aluminosilikat und Tonmaterialien ausgewählt ist, Bilden von Papier aus der genannten Schlämme, Bilden einer dieses Papier enthaltenden Monolithstruktur, und Aktivieren der Monolithstruktur durch Leiten eines Aktivierungsgasstroms durch die Monolithstruktur auf einer ausreichenden Temperatur, um mindestens einen Teil des Bindemittels in dem Adsorptionsmittel zu zersetzen, **dadurch gekennzeichnet, dass** die Temperatur im Bereich von 400°C bis 500°C liegt.

**2.** Verfahren nach Anspruch 1, wobei das Aktivierungsgas aus der Gruppe ausgewählt ist, die aus Stickstoff, Argon, Wasserstoff, Sauerstoff, Distickstoffoxid, Ozon und Gemischen hiervon besteht.

**3.** Verfahren nach Anspruch 1 oder Anspruch 2, wobei die Temperatur ausreichend ist, um mehr als 50% des Bindemittels zu entfernen.

**4.** Verfahren nach einem der vorhergehenden Ansprüche, wobei die Bindemittel aus der Gruppe ausgewählt sind, die besteht aus Acryl-Latex, Stärke, Polyvinylalkoholen, Acrylen, Polyurethan, Polyethylenglycol, Polypropylenglycol, Polyacrylsäure, Polyamid und Polyamin.

**5.** Verfahren nach einem der vorhergehenden Ansprüche, wobei das Adsorptionsmittel ein Zeolithtyp X oder Zeolithtyp A ist, wobei der Zeolith Lithiumkationen, Lithium- und divalente Kationen, oder Lithium- und trivalente Kationen enthält.

**6.** Verfahren nach einem der vorhergehenden Ansprüche, wobei das Aktivierungsgas Stickstoff ist und das Adsorptionsmittel während einer Periode von 10 Stunden auf einer Temperatur von 400°C aktiviert wird.

**7.** Druckwechsel- oder Vakuumwechsel-Adsorptionsverfahren zum Trennen einer ersten gasförmigen Komponente aus einem Gasgemisch, das eine erste gasförmige Komponente und eine zweite gasförmige Komponente enthält, das umfasst:

(a) Leiten des gasförmigen Gemischs in eine Adsorptionszone, die ein monolithisches Adsorptionsmittel enthält, das durch ein Verfahren nach einem der vorhergehenden Ansprüche hergestellt worden ist, und wobei das monolithische Adsorptionsmittel in der Lage ist, die erste gasförmige Komponente von der zweiten gasförmigen Komponente zu trennen, und

(b) Rückgewinnen der nicht bevorzugt adsorbierten gasförmigen Komponente aus der Adsorptionszone.

## Revendications

1. Procédé de préparation d'un adsorbant monolithe destiné à une utilisation dans des procédés de séparation de gaz par adsorption modulée en pression ou par adsorption modulée sous pression inférieure à l'atmosphérique (VSA pour "vacuum swing adsorption"), le procédé comprenant les étapes consistant à : former une suspension épaisse contenant de l'eau, des fibres, un liant organique, un adsorbant et un floculant, dans lequel ledit adsorbant est choisi parmi les zéolithes de type X, les zéolithes de type A, ZSM-3, EMT, EMC-2, ZSM-18, ZK-5, ZSM-5, ZSM-11, β, L, la chabazite, l'offrétite, l'érionite, la mordénite, la gmélinite, la mazzite, et des mélanges de celles-ci, l'alumine, la silice, le gel de silice, des matériaux aluminosilicates et argileux amorphes; former du papier à partir de ladite suspension épaisse; former une structure monolithe contenant ledit papier; et activer la structure monolithe par le passage d'un courant gazeux d'activation à travers ladite structure monolithe à une température suffisante pour décomposer une partie au moins du liant présent dans ledit adsorbant, *caractérisé en ce que* ladite température est comprise entre 400°C et 500°C.

2. Procédé selon la revendication 1, dans lequel ledit gaz d'activation est choisi dans le groupe constitué par l'azote, l'argon, l'hydrogène, l'oxygène, l'oxyde nitreux, l'ozone, et des mélanges de ceux-ci.

3. Procédé selon la revendication 1 ou la revendication 2, dans lequel ladite température est suffisante pour éliminer plus de 50 % desdits liants.

4. Procédé selon l'une quelconque des revendications précédentes, dans lequel lesdits liants sont choisis dans le groupe constitué par le latex acrylique, l'amidon, les alcools polyvinyliques, l'acrylique, le polyuréthane, le polyéthylèneglycol, le polypropylèneglycol, l'acide polyacrylique, le polyamide et la polyamine.

5. Procédé selon l'une quelconque des revendications précédentes, dans lequel ledit adsorbant comprend une zéolithe de type X ou une zéolithe de type A, la zéolithe contenant des cations lithium, des cations lithium et divalents, ou des cations lithium et trivalents.

6. Procédé selon l'une quelconque des revendications précédentes, dans lequel le gaz d'activation est l'azote et l'adsorbant est activé sur une durée de dix heures à une température de 400°C.

7. Procédé, par adsorption modulée en pression ou modulée sous pression inférieure à l'atmosphérique, de séparation d'un premier composant gazeux d'avec un mélange gazeux comprenant un premier composant gazeux et un deuxième composant gazeux, comprenant :

(a) le passage du mélange gazeux dans une zone d'adsorption contenant un adsorbant monolithe préparé par un procédé selon l'une quelconque des revendications précédentes, et dans lequel ledit adsorbant monolithe est apte à séparer ledit premier composant gazeux dudit deuxième composant gazeux; et
(b) la récupération du composant gazeux non préférentiellement adsorbé de ladite zone d'adsorption.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5660048 A
- US 5660221 A
- US 5685897 A
- US 5580369 A
- US 5580639 A
- US 5464467 A

**Non-patent literature cited in the description**

- **A.L. MYERS.** *AIChE Journal,* 1983, vol. 29 (4), 691-693
- **V. YASUDA.** *Heterog. Chem. Rev.,* 1994, vol. 1, 103